# EUROPEAN PATENT SPECIFICATION

(11) **EP 0 904 615 B1**
(45) Date of publication and mention of the grant of the patent: **05.09.2001**
(21) Application number: 97928819.8
(22) Date of filing: 30.05.1997
(51) Int. Cl.: H01S 3/08, H01S 3/0941, H01S 3/109, H01S 3/13, H01S 3/102

(54) **PULSED LASER WITH PASSIVE STABILIZATION**
GEPULSTER LASER MIT PASSIVER STABILISIERUNG
LASER PULSE A STABILISATION PASSIVE

(30) Priority: 31.05.1996 US 15870 P
(43) Date of publication of application: 31.03.1999
(73) Proprietor: Iridex Corporation, Mountain View, CA 94043-1824 (US)
(72) Inventor: MARSHALL, Larry, R., Mountain View,California 94041 (US); KELSOE, Wayne, E., San Jose, CA 95120 (US); BUZAWA, David, San Jose, CA 95129 (US)
(74) Representative: Kramer, Reinhold, Dipl.-Ing.
(86) International application number: US9709601
(87) International publication number: WO9745901

(56) References cited:
- US-A- 5 446 749
- US-A- 5 511 085
- APPLIED OPTICS, vol. 30, no. 9, 20 March 1991, pages 1011-1013, XP000179459 JEYS T H: "SUPPRESSION OF LASER SPIKING BY INTRACAVITY SECOND HARMONIC GENERATION"
- IEEE JOURNAL OF QUANTUM ELECTRONICS, vol. 30, no. 1, 1 January 1994, pages 167-169, XP000440093 PINTO J F ET AL: "SUPPRESSION OF SPIKING BEHAVIOR IN FLASHPUMPED 2-UM LASERS"
- OPTICS COMMUNICATIONS, vol. 71, no. 5, 1 June 1989, pages 295-300, XP000051829 DI FONZO S ET AL: "LASER POWER STABILIZATION BY MEANS OF INTERNAL SECOND HARMONIC GENERATION"

## Description

This application relates generally to laser sources, and in particular to diode-pumped frequency doubled laser sources.

Applicant's earlier U.S. Patent No. 5,511,085 describes such a laser source which operates continuous wave, and identifies a number of prior art publications relevant to construction and operation of these devices. This document discloses a number of effective frequency doubling laser system configurations, a review of the general prior art, as well as a disclosure of a passive stabilization technique which was shown to greatly enhance stability of the wavelength conversion process.

In general, the prior art pumped doubling systems employ active temperature stabilization of the doubling crystal, of any intracavity waveplates or etalons, and usually of the laser crystal itself in order to achieve a sufficiently stable output. Without strict temperature control the systems may be poorly behaved. Slight changes in birefringence, caused for example by misalignment of the doubling crystal, result in output instabilities. The lasers may be forced to run single-longitudinal mode in one or both of two orthogonally polarized directions to obtain beam power stability, thus requiring a number of additional components in the cavity. In general, doubling systems are much more sensitive to component quality than are other systems. What is needed is a passively stabilized laser that does not require tight temperature control or multiple intracavity elements, a laser which is robust and insensitive to vibration.

Many practical applications of CW green lasers require intermittent operation. For example, among medical applications, commonly necessary photocoagulation procedures require that the green source be "pulsed", typically with a pulse duration of one to five hundred milliseconds. The intervals are generally selected to achieve a particular tissue temperature over a specified depth, and this temperature distribution is determined by factors such as the tissue thermal conductivity and absorbance (which are known) and the laser output power, which must be controlled. In this pulsed mode of operation, the laser output is therefore required to be stable; quasi-Q-switching or spiking behaviors, with their extreme variations of energy, could be harmful. For example such spiking operation could cause damage to the eyes of the patient in a retinal coagulation procedure. The prior art techniques for maintaining output stability all rely on stringent temperature control. However it is not possible to achieve static temperature of the doubling crystal when the fundamental laser output is to be pulsed, because the light passing through the crystal causes local heating. In a typical pulse, the doubling crystal and laser crystal temperatures might rise by as much as 30 °C. Even if the temperature rise is not this great during a single pulse, repetitive pulsing of the laser in an "on demand" fashion will cause a steady increase in temperature. As a result the doubled output will exhibit widely varying stability characteristics. Anthon has shown that a temperature excursion of only 0.1 °C is sufficient to destabilize doubled output.

As a result, in order to achieve a suitable output from a diode-pumped intracavity doubling laser, one generally has to operate the laser at constant power and allow it to stabilize. Because sudden changes in diode temperature, thermal lensing, or doubling crystal temperature cause instabilities in the laser, if one requires "green on demand" performance, one would have to run the laser continuously and shutter the output. This would result in substantial heating and power consumption, so such a device would be a poor commercial competitor to existing ion lasers.

Another set of medical applications, the ablation or coagulation procedures used in dermatology, require a controlled dose of light to be delivered in a time that is short compared to the thermal relaxation time of tissue. These time intervals are so short that if the laser output is chaotically fluctuating it will not be possible to even approximate an average output power or an average "delivered thermal energy" during the pulse interval, making it impossible to achieve a controlled dose.

Further, in industrial applications such as marking or printing, the ability to turn the laser on and off rapidly- and to know that a specified power is achieved in a pulse interval-- would be advantageous. If such operation were achieved, the laser beam could make a mark, be shut off, moved to point at a different location, and then reinitiated to mark the new location.

The ability to pulse a solid state laser could also be used to significantly improve laser performance and simplify manufacture in several respects. Effects such as thermal birefringence and lensing are greatly reduced in CW pumped lasers if the duty cycle can be reduced. For example, in a ten per cent duty cycle operation requiring one Joule of laser light to be delivered over a tenth of a second, the average output power would be one watt, while the equivalent CW laser power would be ten watts. The thermal effects present in a ten watt CW laser would be ten times greater, making it a more difficult device to produce.

An array of diodes end pumping a solid-state laser can be pulsed at a rate sufficient to induce CW operation, as described, for example in Rosenkranz U.S. Patent No. 3,982,201, and the diode light may be collected either by low f-number optics or optical fibers. Applicant has previously described, in United States Patent No. 5,511,085, a passive stabilization technique which does not require temperature stabilization to produce stable wavelength-converted output from the solid-state laser. According to that technique, by using a sufficiently short lasing cavity to achieve a high mode-beating frequency, spiking behavior causes the efficiency of the wavelength conversion process to be increased. Since the laser will always operate in the mode that minimizes its loss (in this case the wavelength doubling, which passes out of the cavity as output power), shortening the cavity suppresses spiking: the laser therefore operates without spiking and the output remains stable.

As noted above, for many practical applications, such as retinal photocoagulation, green light is the optimal portion of the spectrum for effective treatment, and the design of a diode-pumped green laser for such medical applications is therefore a highly desirable goal. However, practical implementation of such a laser, one capable of accurately performing the necessary range of pulsed exposure treatment protocols developed in various branches of medicine and surgery, remains incomplete, or suffers from certain operational constraints which prevent a diode-pumped architecture from fully competing with other better developed, but more costly, conventional constructions.

Various recent advances have been reported in the literature, such as a two watt cw green laser that operates from a single phase domestic line power source, and a five watt cw green laser for pumping applications that has demonstrated a significant noise reduction over ion laser sources.

The biggest impediment to successful development of diode-pumped green lasers has been the "green problem," first analyzed by Tom Baer (*J*. *Opt*. *Soc*. *Am.,* B3, 1175 (1986)). Baer showed that severe amplitude fluctuations occurred in intracavity doubled lasers due to longitudinal mode coupling. In diode-pumped systems this was an especially severe problem because of the tendency of these lasers to oscillate on few longitudinal modes. The Spectra Physics company found one solution to the green problem in diode-pumped systems by lengthening the laser cavity to allow a large number, about one hundred, longitudinal modes to oscillate simultaneously, thus significantly reducing the amplitude of the mode-coupling noise. Their long-cavity diode pumped source was manufactured as a "plug-in" replacement for ion lasers up to about five watts in power, that was embodied in a unit about the same size as an ion laser due to the one meter cavity length required, but was much more efficient and therefore required only a small liquid cooler. Applicant's U.S. patent 5,511,085 describes another approach to stabilizing the doubled green output of a pumped systems, and more recently, applicant's U.S. patent application Serial No. 08/562,297 filed November 22, 1995 (WO 9719503 A) has described an intracavity doubler that substantially relaxes alignment constraints for high power CW diode pumping. All of these advances have improved the prospect of ultimately constructing a useful robust, dependable diode-pumped green doubling system for medical applications.

However, despite these advances, the ion laser is still widely accepted, and one manufacturer continues to sell over a thousand ion lasers per year for use in photocoagulators alone. Like gas laser tubes, ion lasers are now a well developed technology that is inexpensive to mass-produce. Small-frame one watt ion lasers do not need chillers, unlike their solid-state competitors. One such photocoagulator made by Coherent is about the size of a suit-bag, and has a tube life exceeding one thousand hours. Ion lasers can turn on in milliseconds, whereas diode-pumped lasers, by contrast, require significant on-time in order to stabilize, and have only recently been able to produce user-adjustable output power without de-stabilizing. This drawback stems from the fact that, although diodes can turn on very quickly, in nanoseconds or microseconds, they suffer frequency chirp due to thermal effects over a time span of tens of milliseconds when they are energized. As a result, diode-pumped lasers see a varying amount of absorbed pump power, giving rise to long turn-on transients.

In order to effectively compete with or fully replace ion laser technology, it therefore appears that a solid-state laser would have to be smaller and easier to cool, would need to operate "hands-off" without transients or adjustment, and should be significantly longer-lived. In short, to be accepted, the next generation of diode-pumped green lasers would need to be more like laser diodes themselves.

### Summary of Invention

In accordance with one aspect of the present invention, a diode pumped doubling system employs a diode source to pump a laser crystal, which drives a doubler in the same laser cavity. The diode is operated in a pulsed or low duty cycle pumping regimen, and the cavity length is set sufficiently short to inhibit transient lasing responses to the switching of the diode input and to produce a stable and a known or controlled energy output in the pulse interval. The construction allows a much looser temperature control, and runs stably during the initial turn-on interval of the laser diode to produce a controlled dose of defined duration suitable for medical or industrial applications. In a preferred embodiment, the device is operated with a thermal control system that creates isotherms in the active volume, and preferably operates one or more separate heat sources and/or sinks to preheat the doubling crystal, create an oriented gradient or control the direction and rate of migration of an isotherm across the mode volume during intermittent operation. Preferably a heater is also applied to the diode to reduce transient ramp up.

In accordance with a further aspect of the invention, a diode-pumped laser doubling system is stabilized by its cavity parameters to lase continuously during each pulse and a coarse temperature control is applied to the doubling crystal to prevent large thermal excursions. The doubling crystal is a preferably a non-linear crystal such as KTP, LBO or BBO which is sensitive to alignment in one direction ― e.g. KTP with an *x-z* tuning angle θ of 90° and non-critical phase matching φ in the *x-y* plane. The crystal is mounted and aligned in the horizontal plane, and clamped between heat source and sink on its bottom and top surfaces to establish a temperature gradient in the vertical, non-critical direction without impairing critical alignment during either clamping or directional heating. This provides an isotherm in the critical plane. The gradient is then shifted up or down, by selective actuation of the source and/or sink in coordination with the timing of the set pump pulse regimen to precondition or maintain the temperature within the horizontal doubling stratum constant within about five degrees, for a sufficiently long time and over the full range of duty cycles.

In other embodiments, the doubler may be clamped between a cooler on one surface , and both a heater and a cooler which are independently actuable on its other surface. The independently actuable thermal elements are then actuated in a sequence to create a thermal dip or a sloped gradient across the doubling stratum. During pulse actuation , the heat internally generated at the center then complements the initial thermal distribution to enhance or extend the uniformity of its temperature. The thermal elements may be switched to a cross bias mode during or just prior to initiation of the pulse sequence, so that heat arising in the center migrates more quickly outward, so that the center is only minimally perturbed during an extended interval as the distribution peaks. Preferably the diode itself is preheated by an amount effective to sharpen its rise time and enhance its efficiency during pulse initiation, giving the doubled output a better defined leading edge shape.

### Brief Description of the Drawings

These and other features of the invention will be understood from the description herein of its theory of operation, taken together with the drawings and a discussion illustrating illustrative practical embodiments thereof, wherein
FIGURE 1 illustrates a first embodiment of the present invention;
FIGURE 2 shows a comparison of doubled output in accordance with the present invention and output of the prior art during pulsed operation;
FIGURE 3 illustrates spiking behavior and number of modes in relation to cavity length;
FIGURE 4 illustrates doubling conversion and spiking;
FIGURE 5 shows the efficiciency improvement during pulsed diode operation obtained by preheating the diode (curve a) and by pre-heating both the crystal and the diode (curve b)
FIGURE 6 shows a green output pulse of applicant's prior art passively stabilized pulsed intracavity doubled laser;
FIGURE 6A shows the relationship of green output power to diode drive current for a pumped doubler in a long optical cavity;
FIGURE 7 shows another embodiment of the present invention having one or more thermal control elements;
FIGURE 7A shows a detail of another or further embodiment of the present invention having opposed thermal control elements; and
FIGURES 8A-8B show a scalable side-pumped architecture in which these thermal control elements have been fitted.

### Detailed Description

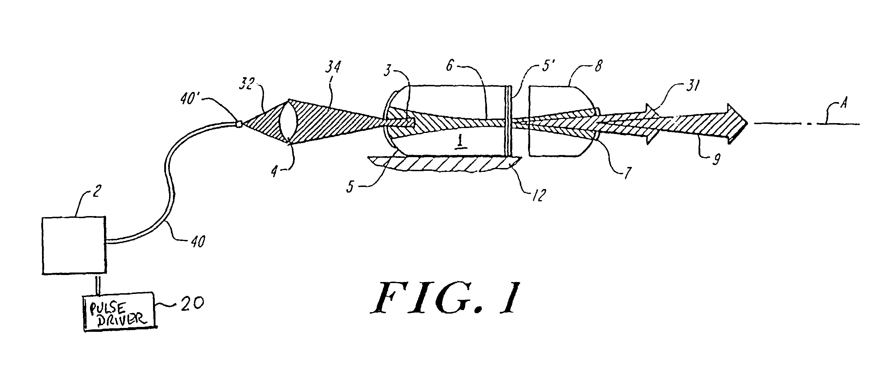

Figure 1 shows one embodiment of the system of the present invention, in which a laser rod or crystal 1 is pumped by a laser diode array. The diode array 2 is coupled via an optical fiber or fiber bundle 40 to an output coupler 40' which provides a defined diode output beam 32. An optical assembly 4, which may include one or more lenses, focuses and directs the incident beam 32 as a shaped pumping beam 34 onto an entry end face 5 of the crystal 1. In the illustrated embodiment, the laser crystal 1 is end-pumped by the fiber-coupled diode array; that is, the pump radiation is directed along the same axis as that along which the laser crystal 1 emits fundamental radiation. The fiber coupling simply bundles the outputs from many diodes and allows the pump laser array 2 to have a high degree of flexibility in package design, yet achieve precise alignment with respect to the input optics 4. This much of the illustrated diode pump construction is similar to that reported, for example, by K. Kubodera and J. Noda, in Appl. Opt. vol. 21 (1982) pp. 3466, and the system shown in Figure 1 of applicant's own earlier U.S.Patent 5,511,085. The diode power may alternatively be directly aimed at the end face 5, as described in applicant's earlier U.S. Patent Application Ser. No. 08/562,297 filed November 22, 1995 (WO 97 019503 A), in which case a fiber bundle or light pipe array may be used without intervening coupling optics to illuminate a region of the face 5. As shown, the pump beam is largely absorbed within a short distance of it's entry point. As further shown in the FIGURE, a pulse driver 20 provides one or more electrical pulses of short duration, which vary with the particular application in a manner discussed more fully below, to power the diode array 2 and thus turn the pump beam ON and OFF; thus it does not run continuously. The present invention is directed to a construction that achieves stable operation despite the transient states and unstable effects normally expected in such discontinuous operation of the diode source.

With further reference to Figure 1, the pumping beam 34 is directed into a small gain region 3 in the crystal 1 and excites the emission of a fundamental laser beam 6. The beam 6 passes along axis A and through the front face 5' of the crystal 1 into a second crystal or medium which is a non-linear optical element 8. This element 8 converts the fundamental beam into a final output beam of higher frequency, such as a frequency-doubled or second harmonic beam, that exits as the illustrated beam 9. At the far, i.e., rightmost, end of the non-linear element 8, a mirror 7 reflects energy at the fundamental frequency of beam 6, i.e., reflects the beam 6 energy which was not converted to the doubled frequency, so that it again traverses the element 8 and crystal 1, first in a right-to-left direction and then back, from the face 5, toward the right. This retraversed energy then is converted in the non-linear element 8 to the second harmonic, and exits as additional second harmonic power, illustrated as beam 31, which augments the single-pass converted power in beam 9.

The back face 5 of the laser crystal 1 at which the diode pump light enters is coated to transmit the incident diode radiation of beam 34 and to totally reflect the beam of fundamental laser radiation 6 which is generated by the laser crystal in response to the diode pumping. The front face 5' of the laser rod, or crystal 1 is anti-reflection coated at the fundamental laser wavelength, allowing the fundamental light generated in crystal 1 to pass directly to the non-linear doubling crystal 8. The back face 5 of the laser crystal 1 and the mirror 7 thus define an optical cavity containing both the crystal 1 and non-linear doubling element 8. The mirror 7 is highly transmitting at the second harmonic wavelength, i.e., one-half the fundamental wavelength, which therefore passes as output energy from the cavity.

Several additional preferred properties of the features of the embodiment of Figure 1 are discussed more fully in applicant's earlier U.S. Patent 5,511,085 and will be briefly mentioned here. Among these features, front face 5' of the crystal 1 is preferably coated to be highly reflecting at the doubled wavelength so that the backward pass of doubled light (i.e., frequently-doubled light emitted in the non-linear element 8 and propagating toward the laser crystal 1) is reflected 180° to form a doubled beam 31 traveling in the output direction, i.e., left to right, thus augmenting the doubled beam 9. This construction and operation reduces absorption of doubled light by the laser crystal 1, which might otherwise generate significant heat. Another such feature, indicated by the multi-layer depiction of front face 5' in Figure 1, is a construction whereby the reflective surface at this position -- either coated on face 5' or separately positioned and rigidly aligned therewith -- is aligned to constitute, together with the back mirror 5, an intracavity etalon which limits the number of longitudinal cavity modes. If coated directly on the crystal face 5' such coating makes crystal 1 into a monolithic etalon, and produces high stability of the etalon mirror alignment. It is also contemplated that the solid-state laser system of Figure 1 may be pumped with other sources of pump light, and may also be used with other types of intracavity non-linear crystal, in addition to frequency doubling crystals. For example, an intracavity optical parametric oscillator, as disclosed in U.S. Patent 5,181,211, can be stabilized in accordance with constructions of the present invention. However, for clarity of exposition, the discussion below focuses on basic embodiments of a laser diode-pumped laser system with an intracavity frequency doubler, rather than on the generally more complex systems that have other non-linear crystal components, or other pump sources.

According to a principal aspect of the present invention, the pulsed diode-pumped laser is stabilized during intermittent operation by setting the cavity length short enough, for example, in the range of one to three centimeters, to smooth the fundamental light beam during diode transient operation. In further aspects, the stability of the diode, of the doubler or both are further enhanced by preheating or thermal gradient conditioning, which advantageously may further be tailored and synchronized to the next pilse sequence. These features and structures for achieving such operation will be described further below, following a discussion of the factors giving rise to transient instabilities in the prior art.

In general it will be appreciated that when a diode is switched ON, a heating of the lasing medium will start that produces relaxation oscillations and start up transients as the diode cavity changes length and successively lases in different modes producing a chirp spanning a 10-20 nanometer increase in wavelength. When this transient burst is used as a pump beam, the fundamental output from the pumped laser crystal will generally increase or decrease in power as the pump power rises and dips, but also suffer in efficiency as the diode light starts or moves outside the narrower absorption band of the crystal. A temperature change of 20 °C in the diode may introduce a wavelength shift of 6 nm, greatly above the 2-3 nm crystal gain band width. By inserting a lossy element in the cavity, the amplitude of the output swings may be reduced, but the chirped spiking remains of sufficient magnitude to grossly distort the average power output, and during the initial rise time of the diode the crystal output may be greatly below the intended value. A comparison of time scales is instructive. Laser diodes can be pulsed with rise times in the nanosecond regime, but the diode output exhibits chirp of tens of milliseconds. In a typical laser diodes, the junction temperature can be tens of degrees higher than the base temperature when the diode is operating. The junction temperature also rises when a diode is pulsed, even if the base temperature is held constant; this rise in temperature causes a red-shift in diode wavelength, typically over a 10-30 ms time interval, depending on the diode package.

When used to pump an intracavity doubling system, other aspects of heating must also be considered for the other elements of the system. In pure CW operation, the doubling crystal experiences an increase in temperature due to small but finite absorption of the intracavity flux. In typical operation at the 2W green level, the doubling crystal may reach 60°C temperature when there is good heat sinking of the crystal. When the laser is operated in a pulsed mode at say 10% duty cycle, the crystal temperature is much closer to ambient (say 30°C). Therefore, the doubling crystal can experience a 30°C temperature excursion simply because of changes in the duty cycle of operation. and this temperature change can alter the phase-matching angles of the doubler through refractive index changes, resulting in reduced doubling efficiency.

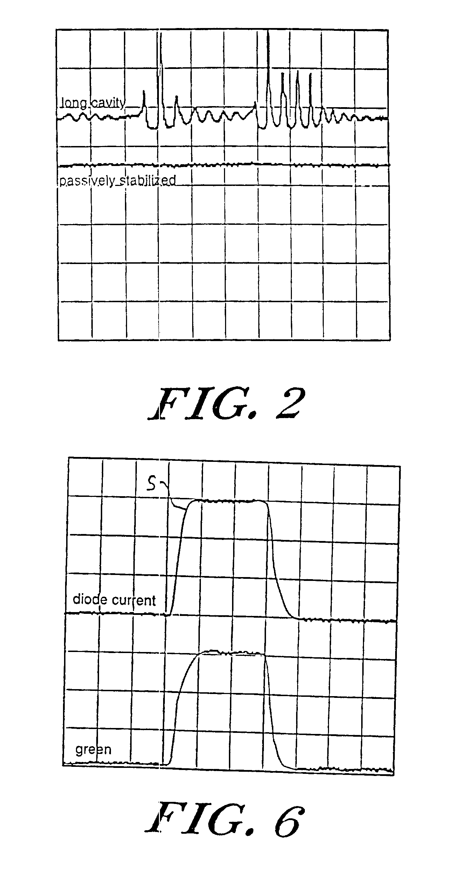

In intracavity-doubled lasers, the coupling between doubling of an individual longitudinal mode, and sum mixing of adjacent longitudinal modes causes instabilities. Rather than simply causing mode beating, the coupling can plunge the laser into relaxation oscillations causing quasi-Q-switching behavior. This instability of a green doubled output is shown in the upper oscilloscope trace of Figure 2. The trace shows the typical output of an intracavity doubled diode-pumped Nd:YAG laser, when no efforts are made to control crystal temperature or mode structure. The output is chaotically unstable, looking rather like a random collection of relaxation oscillations. The output power in this mode of operation is significantly higher than for true CW operation, depleting the necessary population of excited states so this mode is unstable and frequently hops into quasi-stable states of lower output power. Relaxation oscillations occur in solid-state lasers due to the energy storage capability of lasers which imparts a time lag between a change in operating conditions and the resulting change in laser flux.

To solve a similar stability problem, the "green problem" applicant has previously proposed, in the aforesaid '085 patent, reducing cavity length to increase the spiking frequency and employing a doubler or non-linear element that operates more efficiently at higher intensities of pump radiation, a construction in which the laser sees the intracavity doubled output as a source of loss, and minimizes this loss. Lowest green output power is then achieved for stable CW operation, forcing the laser to preferentially lase only in this mode. In that technique, the laser effectively quenches or inhibits spiking operation and runs in a CW mode. The bottom oscilloscope trace of FIGURE 2 shows such operation. This approach achieves higher power, quasi-CW green output in applications that do not require stability on short time scales.

Applicant has now found that a related construction is effective to stabilize output power even on the very short time scales involved in pulsed diode operation, and even when the source of spike-like perturbations lies the initial chirps and turn-on transients of pump diode light.

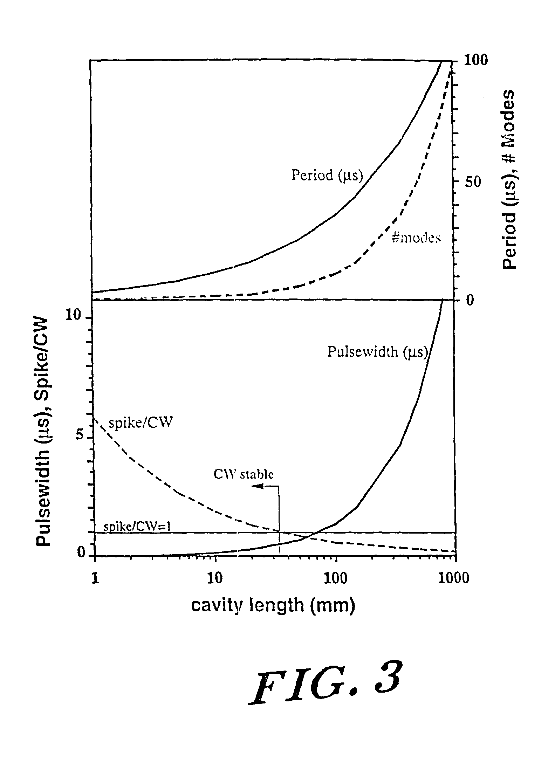

When the laser cavity is long, many longitudinal modes can lase under the gain bandwidth of the laser. As shown in the upper portion of Figure 3, for a 100 mm spacing of the cavity-defining mirrors, about 10 modes lase, while for a one meter spacing the number is closer to one hundred modes (as in the Spectra-Physics design). If the cavity is shortened, the spacing of these longitudinal modes, given by c/2L (where c is the speed of light and L is the cavity length), is increased. For cavity lengths around 30mm, only a few longitudinal modes can lase under the gain bandwidth of a Nd:YAG laser crytal. Further reduction of cavity length to around one millimeter precludes all other modes, and the laser oscillates "single-frequency." This latter case is achieved in the "microchip laser." Microchip lasers can be intracavity doubled and produce stable CW green output, a design feature which is exploited in commercial systems by the Uniphase company.

Modeling of relaxation oscillations in intracavity-doubled lasers is fairly straightforward; the upper and lower solid curves of Figure 3 show the calculated influence of cavity length upon period and pulsewidth of the relaxation oscillations, while the upper dashed curve represents the number of longitudinal modes operating. As the cavity length is decreased, the number of longitudinal modes also decreases, and their frequency spacing becomes large. In addition, the effective cavity lifetime becomes short. The relaxation oscillations produced by a laser operating under these conditions occur at a high frequency and produce output pulses with sub-microsecond pulse lengths, as shown in the lower solid curve in Figure 3.

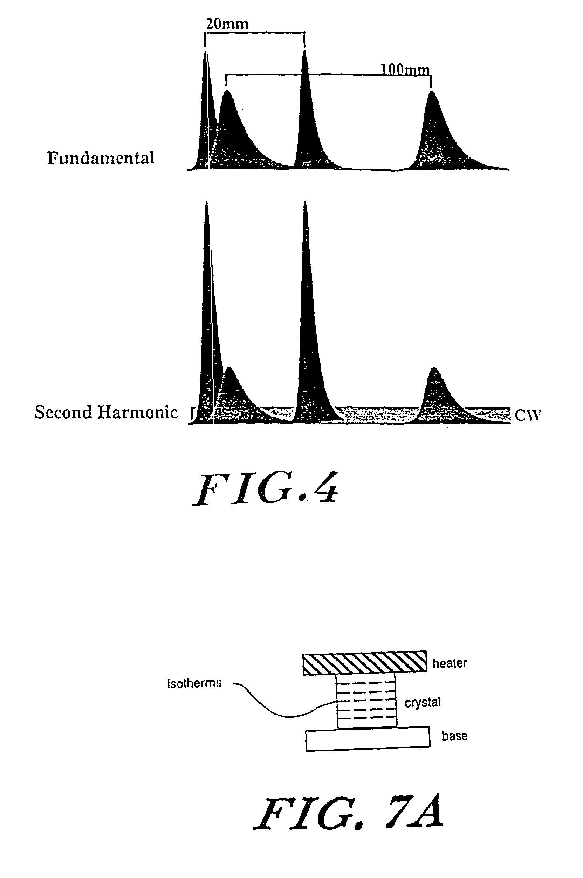

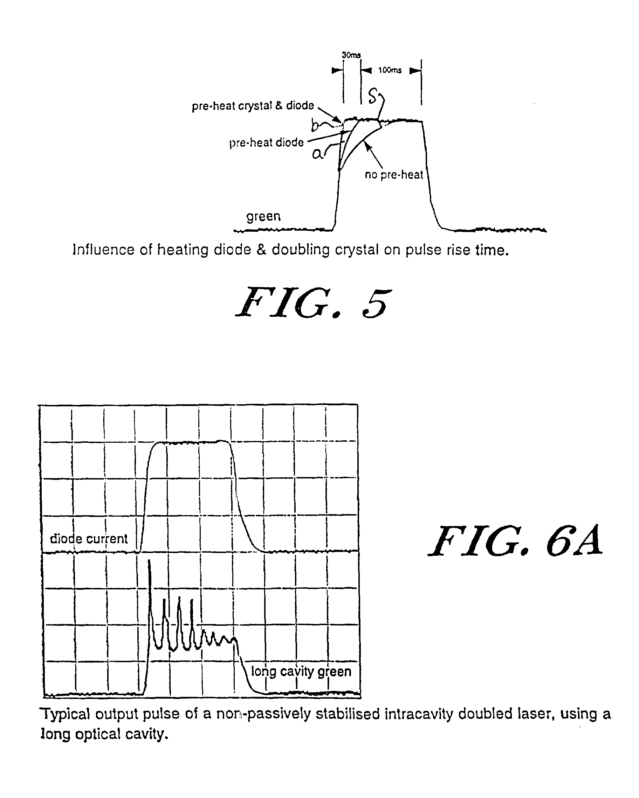

As the cavity becomes even shorter, the frequency of relaxation oscillations increases while their pulse duration decreases, so that one can routinely produce green pulses shorter than 50ns in this way. Once the duration of relaxation oscillations falls below about 100ns, they become efficient pumps for frequency doubling. The peak conversion efficiency quickly exceeds that for pure CW operation, so that when the oscillation frequency is sufficiently high, the average green power produced by the relaxation oscillations exceeds that produced in stable CW operation. FIGURE 4 graphically illustrates this dependence of doubling efficiency on the fundamental waveform. When the cavity is this short, the green output becomes stable, and little can be done to perturb it. In practice, applicant has found a cavity length below 100 mm, preferably below about 30 mm, and, most preferably in the range of 5-30mm to be effective to stabilize an intracavity doubler pumped by a pulsed diode.

In exploring stability characteristics of a pulsed doubler stabilized in this manner, applicant has operated such a device in uncontrolled temperatures where the diode and doubling crystal temperature vary over 20°C without de-stabilizing the CW green output. The diode power was varied from threshold to maximum, and the CW green output simply followed along substantially proportionally. Most importantly, although applicant had previously applied such stabilization to the green problem in CW lasers, transient perturbations of a type not previously considered have now been found to not destabilize the output, making this architecure suitable for producing stable output over a wide range of drive power and duty cycles, and also for producing controlled "pulses" of green light for photocoagulators.

In general, it will be understood that photocoagulation instruments operate in several possible intermittent or transient modes, each of which can involve rapidly varying doubling crystal temperature, diode wavelength, and thermal lensing effects. For all of these protocols, applicant sought to apply a controlled dose of constant green power for a selected exposure time, and then cease exposure just as rapidly as it started. For example, for direct retinal treatment it is desirable to apply laser pulses having a duration of about 100 milliseconds, while for certain dermatological procedures pulse durations under one millisecond may be called for.

Because sudden changes in diode temperature, thermal lensing, or doubling crystal temperature cause instabilities in the laser, the conventional approach for such a system would be to operate a diode-pumped intracavity doubled laser at constant power and allow it to stabilize. To achieve "green on demand" performance, one would then have to run the laser continuously and shutter the output, resulting in excessive heating and power consumption. Such a device would be a poor competitor to existing ion lasers. It is also possible to achieve "green on demand" with Q-switched lasers, simply by turning the Q-switch off and on. Additionally, Q-switching increases the green output power of the laser, making it easier to achieve the power levels required for photocoagulation. Several medical companies have in fact developed Q-switched green laser products for medical photocoagulation. However, the cornea can be easily damaged by intense pulses of high peak power. In addition, acoustic shock waves can cause complications such as partial retinal detachment, so in the ophthalmic community, Q-switched lasers are now regarded with some skepticism. Thus the detailed constructions and advantages of fabrication and operation of applicant's devices described further below should be considered in relation to these two approaches of the prior art.

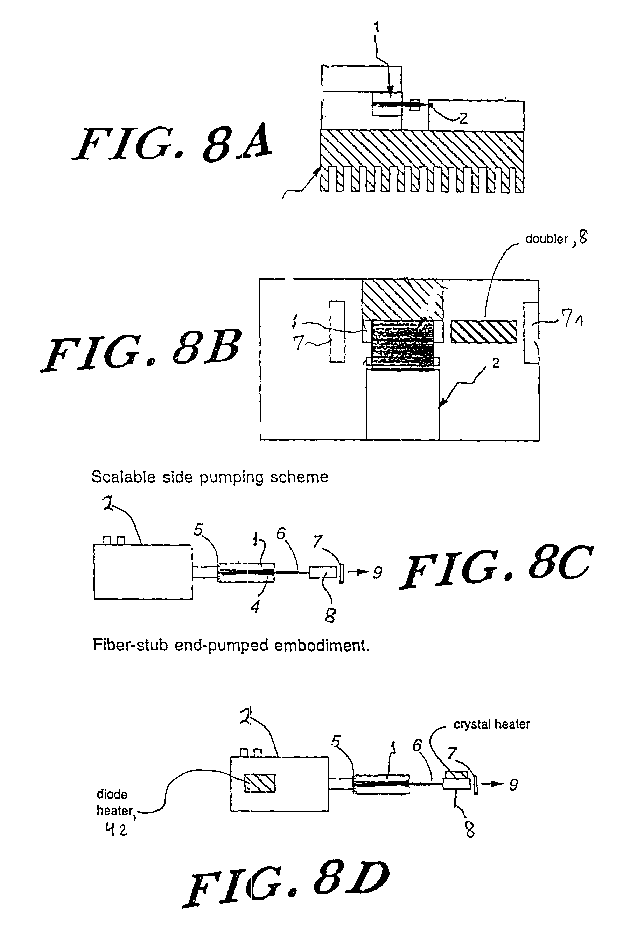

Using the passive stabilization architecture outlined above, applicant has achieved a laser output which faithfully replicates the applied diode current, and in this sense, the green laser acts more like a "green diode" than a traditional diode-pumped laser. Figure 6 shows scope traces of an applied diode current pulse, and the green laser output generated by that current pulse. A basic embodiment depicted therein employed a commercially available diode array in a P6 package available from Spectra Diode Labs and rated at twelve watts to pump a three millimeter diameter YAG rod ten milliometers long and spaced about one millimeter from its bundled fiber output face, in a construction like that of FIGURES 8C-8D below. The rear face of the YAG crystal was coared to pass the 810 nm diode light and reflect the fundamental and doubled light. Output of the YAG crystal was directed at a KTP crystal about 4 mm square and 6mm long, and the front cavity mirror was coated to form an output coupling for the 532nm doubled light. The total cavity length was twenty millimeters. The diode-pumped green laser assembly was compact, occupying a volume of about 6" x 3.5" x 1.35", with a level of heat generation that allowed it to be air-cooled, and such that the entire photocoagulator system draws less electrical power than a tea kettle.

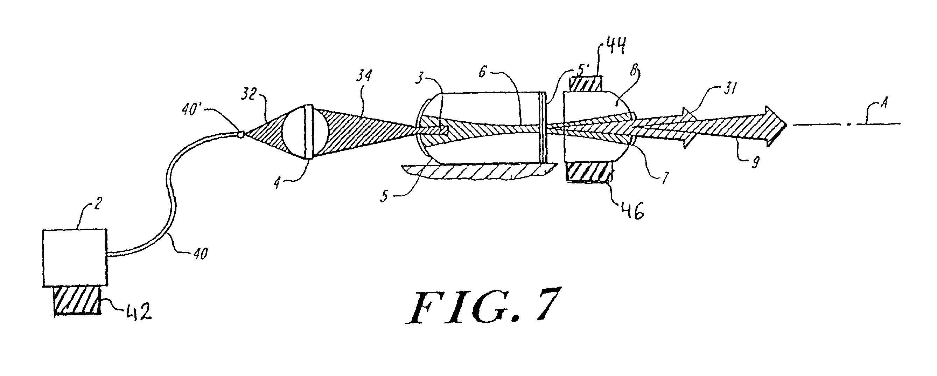

As shown in FIGURE 6, the green output is not exactly linear, and the pulse shape not entirely perfect. The rising shoulder S of the diode current is reflected in a somewhat slower green turn on. This discrepancy is addressed in accordance with a further aspect of the invention by heating the diode, the doubling crystal, or both. Further performance improvements are obtained with specific doubling materials and the application of dynamic heat profiles, described with reference to FIGURES 7A *et seq* below.

FIGURE 5 illustrates this in more detail, together with the improved output so obtained. As shown, when an essentially square 130 ms drive current pulse is applied to the pump diode, the output green power initially achieves a relatively low magnitude, and rises slowly over the first 30-60 ms to its steady level along a shoulder S. This ramp-up behavior arises both from the changing characteristics of the diode and the doubler. As shown in curve a of FIGURE 5, by preheating the diode source, transient behavior of the diode is reduced and the green output is made to rise more abruptly, more accurately tracking the applied pulse signal. By also preheating the doubling crystal, the doubling efficiency of this initial pulse edge is further enhanced, as indicated by curve b in the FIGURE, to yield a green output of a shape identical to the applied drive signal. In preferred embodiments of the invention, this enhanced operation is achieved by providing a thermal control system which preconditions one or more of the diode, the non-linear element, and optionally the laser crystal prior to application of a drive signal, and preferably by an amount which depends on the intended pulse regimen. The thermal control system may include a sink, a heater or both, and control elements for actuating these elements in a sequence to pre-heat the laser diode and/or the doubling crystal. In prototype embodiments applicant has shown that by mounting a heater in contact with the doubling crystal to maintain temperature within a relatively loose tolerance of ±5°C over the full range of expected duty cycles, a consistent level of pulsed output doubled power is achieved, whether the applied pulse regimen is a single shot, repetitive shots, or even CW.

The action of the crystal heater is complicated by the fact that the heat source responsible for elevation of crystal temperature resides within the crystal; in order to replicate CW temperature conditions in pulsed mode applicant set out to replicate the gradients within the crystal throught the application of thermal sources, heating and cooling, applied on the outside. A further constraint arises since the crystal must be heat sunk so as to prevent excessive temperature rise, but at the same time must be sufficiently moveable to be optically aligned.

In accordance with one preferred construction for heat sinking the doubler, applicant employs a nonlinear crystals such as KTP, LBO and BBO which is alignment sensitive in one direction. In the case of KTP for example, the X-Z tuning angle (theta) is 90°; the phase matching is so called "non-critical"-crystal phase matching in the X-Y plane (phi) and the crystal's doubling efficiency is most sensitive only in this plane. The crystal can therefore be mounted with alignment only in the horizontal direction, with clamping action after alignment to ensure good heat sinking, provided the crystal is oriented with the X-Y plane in the horizontal direction. When so clamped between heater/sink elements, the thermal gradient is the in the vertical direction, which is non-critically phase-matched and therefore insensitive to alignment and temperature variations. In this arrangement the crystal can be heated from the top and cooled from the bottom, while the temperature in the center through which the laser beam propagates can be controlled to be substantially homogeneous. By maintaining small physical size of the crystals, the transient response times can be kept relatively short and the absolute temperature changes relatively low.

In this aspect, the invention provides a means for not only maintaining temperatures at critical points but for producing and maintaining critical temperature gradients during a transition from heating supplied externally by electrically energized elements to heating originating in the crystal interior from absorption of laser light within the optical element. This is preferably done by mounting the critical non-linear element so that it is cooled from one direction and heated from the opposite direction in a manner to maintain the central temperature at at the desired value. The thermal energy supplied by the heater first sets up the desired gradient including a set absolute temperature in the center; the heater is then lowered or stopped when optical energy is applied to and absorbed in the crystal. The heater may then be re-energized so as to reestablish the original gradient between the optically active zone and the primary mount as the transients associated with pulsed laser operation diminish. Thus, the vertically-varying thermal gradient may be made to migrate across the actively illuminated stratum of the crystal. This operation allows the controller to maintain relatively stable thermal characteristics in a layer of the crystal over extended times as the pump laser is operated intermittently.

For enhancing the response of the diode to intermittent operation to achieve an output energy better reflecting the applied electrical pulses, applicant has preheated the diode, either through a "simmer" current pulse below laser threshold, or by simply elevating the temperature of the entire diode package above the optimum temperature for CW operation. This reduces the influence of chirp.

FIGURE 7 shows an end-pumped system of the present invention in an overall system layout similar to that of FIGURE 1, with corresponding elements labelled identically thereto. In this embodiment, additional heat control preconditioners as described above are provided for both the laser diode pump source and the intracavity doubler. The diode heater 42 and the crystal heater 44 may be operated to maintain the respective diode source 2 and the doubler 8 at a temperature above ambient temperature. When the diode is to be energized, the controller reduces or entirely turns off power to the heater, so that the heat internally generated by laser actuation operates substantially to maintain the static the heat distribution already established in the crystal or diode by the heater element(s). For a given set of pulse power, duration and actuation times the heat flow and distribution may be readily modeled and the precise operation of the controller may be determined by techniques well known in control theory to achieve this effect. Thus for example, the controller may introduce lag, or apply a proportional heater current, or operate with a combination of lag, delay and proportional heater drive signals to assure that the operation of the device remains substantially isothermal during pulsed laser operation. As further shown in FIGURE 7, a cooler or heat sink, such as a Peltier effect cooler or an air-cooled heat sink 46 is also provided in thermal contact with the non-linear crystal in some embodiments. This permits the small crystal to be quickly re-initialized following pulsed operation, or to establish steeper heat gradients or establish a desired thermal gradient more quickly. It also allows one, by operating the heater and cooler at different times, to establish an asymmetric thermal gradient, to establish a heat profile with a central dip or peak, and otherwise to set up the thermal environment of the doubler to more effectively complement the laser-induced heating and increase doubling efficiency. FIGURE 7A ilustrates a vertical section through the nonlinear element , showing the isotherms created between the heater on the top and the cooler on the bottom. A temperature plot at the right illustrates the temperature at each stratum when a uniform gradient is initially established. As noted above the central value may be selected so that the active doubling volume resides at the desired operating temperature due to pulsed heat generation once the heater itself is switched OFF, and operation of the cooler may cause the induced heat to selectively migrate down, so that the pre-pulse condition is quickly re-established for the next actuation..

In addition to end-pumped configurations as shown in FIGURES 1 and 7, the stabilization of the present invention applies to side-pumped architectures. FIGURES 8A-8B show a scalable side-pumped architecture in which thermal control elements have been fitted. FIGURE 8A is an end view showing the laser crystal 1 mounted between two blocks on a common base or heat source/sink and side pumped by a diode or line of diodes 2. FIGURE 8B shows a top view of that embodiment, illustrating the intracavity placement of the crystal 1 and non-linears element 8 between the cavity-defining mirrors 7, 7A. FIGURES 8C and 8D illustrate another construction wherein a diode array 2 produces its output at a fiber stub to pump a laser 1 and doubling crystal 8 as shown, for example in figure 15 of applicant's earlier U.S. patent application entitled FIBER STUB END-PUMPED LASER. In this construction, the pump diode and the doubling crystal 8 are each fitted with a heater. The invention also contemplates the use of an active cooling device, such as a Peltier cooler to stabilize operation, as appears in FIGURE 8A above, where cooler 7 operates to apply an appropriate heat profile to one or more elements of the system.

The invention being thus disclosed and representative embodiments thereof described, further variations and modifications will occur to those skilled in the art, and such variations and modifications are considered to be within the scope of the invention, as defined by the claims appended hereto.

## Claims

1. A solid-state laser comprising
a main solid-state laser (1) capable of being end pumped into a lasing mode and produce fundamental laser light
a diode array (2) formed of pump light emitting semiconductor diode lasers arranged to direct their pump light onto an end of the solid state laser for enhanced absorption of the pump light in the solid state laser (1) and stimulated emission of a beam (6) of fundamental laser light therefrom
a driver (20) for driving the diode array, and
a nonlinear element (8) positioned with said solid state laser (1) in a laser cavity and illuminated by the fundamental light (6) to produce converted light, said nonlinear element (8) effecting greater non linear conversion of the fundamental laser light (6) when the fundamental laser light is unstable or spiking,
wherein the driver (20) is a pulsed driver for pulsing the diode array (2) thereby changing a coupling condition
and wherein the cavity has a length effective to stabilze output of converted light as said diode array is pulsed by said driver during said changing condition.

2. A solid state laser according to claim 1, wherein said non-linear element (8) is a frequency doubling crystal having a non-critical direction, and wherein said crystal is aligned with said main solid state laser (1) in a plane transverse to said direction, and clamped to a heat control element (44) in said direction.

3. A solid state laser according to claim 2, wherein said heat control element (44) applies a thermal difference to create isotherms in said plane.

4. A solid state laser according to claim 2, wherein said heat control element (44) applies a thermal difference in coordination with a selected pulse regimen to thermally condition the nonlinear element before it is illuminated with the fundamental light.

5. A solid state laser according to claim 4, wherein said heat control element (44) applies a thermal difference in coordination with a selected pulse regimen to thermally condition the nonlinear element as it is illuminated with the fundamental light.

6. A solid state laser according to claim 4, wherein said solid state laser (1) is a medical laser system and said pulsed driver (20) produces pulses effective for ophthalmic applications having a pulse duration over approximately ten milliseconds.

7. A solid state laser according to claim 6, further including means (42) for preheating the diode array by an amount effective the sharpen its output during an initial turn on interval.

8. A solid state laser according to claim 4, wherein said solid state laser (1) is a medical dermatology laser system and said pulsed driver (20) produces pulses effective for coagulation having a pulse duration under approximately ten milliseconds.

9. A solid state laser according to c aim 4, wherein said solid state laser (1) is an industrial laser system and said pulsed driver (20) produces pulses effective for precise marking or cutting ablation.

10. A solid state laser according to claim 2, wherein said heat control element (44) applies a thermal difference in coordination with a selected pulse regimen to thermally condition at least one of the diode array (2) and the nonlinear element (8) prior to application of the pulse regimen, and thereafter maintain a desired temperature range for operation during a successive pulse regimen.

11. A solid-state laser system comprising
a main solid-state laser (1) capable of being pumped into a lasing mode to emit a fundamental laser light beam (6)
an array (2) of pump light emitting semiconductor diode lasers arranged to direct their pump light into the solid state laser (1), and a nonlinear element (8) arranged with said solid state laser (1) in a laser cavity to receive the fundamental laser beam (6), and
a pulse controller (20) for pulsing the diode array (2) and thereby initiating changing conditions of generation, coupling or propagation of light in the system
wherein the nonlinear element (8) produces greater nonlinear conversion of the fundamental laser light when the fundamental light is unstable or spiking, and wherein the main solid state laser (1) and the nonlinear element (8) reside in a laser cavity that is sufficiently short so that said nonlinear element (8) continues to provide a converted output at a stable level during said changing conditions of generation, coupling and propagation as said array (2) of semiconducting diode lasers is pulsed.

12. The solid-state laser system of claim 11, wherein the pulse controller (20) provides pulse sequences having a characteristic duration of below approximately one millisecond to about ten milliseconds and the system is a medical dermatology system.

13. The solid-state laser system of claim 12, wherein the diode light (32) is manipulated by micro-optics (4) so as to form a single pump spot (3) rather than an extended spot.

14. The solid-state laser system of claim 12, wherein the diode light is directed into the TEMoo mode volume of the solid state laser (1).

15. The solid state laser system of claim 12, wherein the nonlinear element (8) is heated.

16. The solid state laser system of claim 12, wherein the laser output (9) is monitored by a detector and output of the detector to provide a feedback adjustment of diode power and control the laser output.

17. The solid state laser system of claim 12, wherein
the fundamental laser (1) operates on a plurality of laser lines, and
the nonlinear crystal (8) mixes the lasing lines to produce wavelength-shifted output.

18. The solid state laser system of claim 12, wherein at least one of pulse rate or amplitude of the laser diode is modulated to prevent stable operation, and thereby increasing the wavelength converted output of the nonlinear crystal (8).

## Patentansprüche

1. Festkörperlaser, mit
einem Hauptfestkörperlaser (1), der in einen Lasermodus endgepumpt werden kann und fundamentales Laserlicht erzeugt,
einem Diodenfeld (2), das durch Pumplicht emittierende Halbleiterlaserdioden gebildet wird, die zum Richten ihres Pumplichtes auf ein Ende des Festkörperlasers für eine erhöhte Absorption des Pumplichtes in dem Festkörperlaser (1) und eine stimulierte Emission eines Strahls (6) von fundamentalem Laserlicht aus diesem angeordnet sind,
einem Treiber (20) zum Treiben des Diodenfeldes, und
einem nicht-linearen Element (8), das mit dem Festkörperlaser (1) in einem Laserresonator positioniert ist und durch das fundamentale Licht (6) zum Erzeugen von umgewandeltem Licht beleuchtet wird, wobei das nicht-lineare Element (8) eine größere nicht-lineare Umwandlung des fundamentalen Laserlichts (6) bewirkt, wenn das fundamentale Laserlicht instabil ist oder Spiking aufweist,
wobei der Treiber (20) ein gepulster Treiber zum Pulsen des Diodenfeldes (2), wodurch eine Kopplungsbedingung geändert wird, ist, und
wobei der Resonator eine Länge aufweist, die wirksam zum Stabilisieren der Ausgabe des umgewandelten Lichtes ist, wenn das Diodenfeld durch den Treiber während der Änderungsbedingung gepulst wird.

2. Festkörperlaser nach Anspruch 1, bei dem
das nicht-lineare Element (8) ein frequenzverdoppelnder Kristall ist, der eine nicht-kritische Richtung aufweist, und bei dem der Kristall mit dem Hauptfestkörperlaser (1) in einer Ebene quer zu der Richtung ausgerichtet ist und an ein Wärmesteuerelement (44) in der Richtung geklemmt ist.

3. Festkörperlaser nach Anspruch 2, bei dem
das Wärmesteuerungselement (44) eine thermische Differenz zur Erzeugung von Isothermen in der Ebene anlegt.

4. Festkörperlaser nach Anspruch 2, bei dem
das Wärmesteuerelement (44) eine thermische Differenz in Koordination mit einer ausgewählten Pulsregelung zum thermischen Konditionieren des nicht-linearen Elementes, bevor es mit dem fundamentalen Licht beleuchtet wird, anlegt.

5. Festkörperlaser nach Anspruch 4, bei dem
das Wärmesteuerelement (44) eine thermische Differenz in Koordination mit einer ausgewählten Pulsregelung zum thermischen Konditionieren des nicht-linearen Elementes beim Beleuchten mit dem fundamentalen Licht anlegt.

6. Festkörperlaser nach Anspruch 4, bei dem
der Festkörperlaser (1) ein medizinisches Lasersystem ist und der gepulste Treiber (20) Pulse, die wirksam für ophtalmische Anwendungen sind, die eine Pulsdauer über ungefähr 10 Millisekunden aufweisen, erzeugt.

7. Festkörperlaser nach Anspruch 6, der weiter
ein Mittel (42) zum Vorwärmen des Diodenfeldes in einem Ausmaß, das wirksam zum Schärfen seiner Ausgabe während eines anfänglichen Anschaltintervalls ist, aufweist.

8. Festkörperlaser nach Anspruch 4, bei dem
der Festkörperlaser (1) ein Lasersystem für medizinische Dermatologie ist und der gepulste Treiber (20) Pulse, die wirksam für Koagulation sind, mit einer Pulsdauer unter ungefähr 10 Millisekunden, erzeugt.

9. Festkörperlaser nach Anspruch 4, bei dem
der Festkörperlaser (1) ein industrielles Lasersystem ist und der gepulste Treiber (20) Pulse, die wirksam für präzises Markieren oder Schneideablation sind, erzeugt.

10. Festkörperlaser nach Anspruch 2, bei dem
das Wärmesteuerelement (44) eine thermische Differenz in Koordination mit einer ausgewählten Pulsregelung zum thermischen Konditionieren von mindestens dem Diodenfeld (2) oder dem nicht-linearen Element (8) vor dem Anlegen der Pulsregelung anlegt und danach einen gewünschten Temperaturbereich für den Betrieb während einer nachfolgenden Pulsregelung beibehält.

11. Festkörperlasersystem mit,
einem Hauptfestkörperlaser (1), der in einen Lasermodus zum Emittieren eines fundamentalen Laserlichtstrahls (6) gepumpt werden kann,
einem Feld (2) von Pumplicht emittierenden Halbleitlaserdioden, die zum Richten ihres Pumplichtes in den Festkörperlaser (1) angeordnet sind, und
einem nicht-linearen Element (8), das mit dem Festkörperlaser (1) in einem Laserresonator zum Empfangen des fundamentalen Laserstrahls (6) angeordnet ist, und
einer Pulssteuerung (20) zum Pulsen des Diodenfeldes (2) und dadurch zum Initiieren von Änderungsbedingungen der Erzeugung, Kopplung oder Ausbreitung des Lichtes in dem System,
bei dem das nicht-lineare Element (8) eine größere nicht-lineare Umwandlung des fundamentalen Laserlichtes, wenn das fundamentale Licht instabil ist oder Spiking aufweist, erzeugt, und
bei dem Hauptfestkörperlaser (1) und das nicht-lineare Element (8) in einem Laserresonator sitzen, der ausreichend kurz ist, so daß das nicht-lineare Element (8) fortfährt, eine umgewandelte Ausgabe auf einem stabilen Pegel während der Änderungsbedingungen der Erzeugung, Kopplung und Fortpflanzung zu liefern, wenn das Feld (2) von Halbleiterlaserdioden gepulst wird.

12. Festkörperlasersystem nach Anspruch 11, bei dem
die Pulssteuerung (20) Pulssequenzen, die eine charakteristische Dauer von unter ungefähr 1 Millisekunde bis ungefähr 10 Millisekunden aufweisen, liefert und das System ein System für medizinische Dermatologie ist.

13. Festkörperlasersystem nach Anspruch 12, bei dem
das Diodenlicht (32) durch Mikrooptiken (4) derart manipuliert ist, daß ein einzelner Pump-Punkt (3) eher als ein ausgedehnter Punkt ausgebildet wird.

14. Festkörperlasersystem nach Anspruch 12, bei dem
das Diodenlicht in das TEM₀₀- Modus-Volumen des Festkörperlasers (1) gerichtet wird.

15. Festkörperlasersystem nach Anspruch 12, bei dem
das nicht-lineare Element (8) erwärmt wird.

16. Festkörperlasersystem nach Anspruch 12, bei dem
die Laserausgabe (9) durch einen Detektor überwacht und aus dem Detektor zum Liefern einer Rückkopplungseinstellung der Diodenleistung und zum Steuern der Laserausgabe ausgegeben wird.

17. Festkörperlasersystem nach Anspruch 12, bei dem
der fundamentale Laser (1) auf einer Mehrzahl von Laserlinien arbeitet, und
der nicht-lineare Kristall (8) die Laserlinien zum Erzeugen einer wellenlängenverschobenen Ausgabe mischt.

18. Festkörperlasersystem nach Anspruch 12, bei dem
mindestens die Pulsrate oder die Amplitude der Laserdiode moduliert wird, um einen stabilen Betrieb zu verhindern, und dadurch die Wellenlängen-umgewandelte Ausgabe des nicht-linearen Kristalls (8) zu erhöhen.

## Revendications

1. Laser à l'état solide comprenant :
un laser à l'état solide principal (1) capable d'être pompé à une extrémité dans un mode d'oscillation et de produire une lumière laser fondamentale.
un réseau de diodes (2) formé de lasers à diode de pompage semi-conductrice d'émission de lumière disposées pour diriger leur lumière de pompage sur une extrémité du laser à l'état solide pour améliorer l'absorption de lumière de pompage dans le laser à l'état solide (1) et l'émission stimulée d'un faisceau (6) de la lumière laser fondamentale à partir de celui-ci.
un circuit de commande (20) pour commander le réseau de diodes, est
un élément non-linéaire (8) positionner avec ledit laser à l'état solide (1), dans une cavité laser et illuminé par la lumière fondamentale (6) pour produire la lumière convertie, ledit élément non-linéaire effectue une conversion non-linéaire plus grande de la lumière laser fondamentale (6) lorsque la lumière laser fondamentale est instable ou fait des pointes ;
où le circuit de commande (20) est un circuit de commande pulsé pour pulser le réseau de diode (2) changeant ainsi une condition de couplage.
et où la cavité a une longueur effective pour stabiliser la sortie de la lumière convertie quand ledit réseau de diodes est pulsé par ledit circuit de commande pendant ladite condition de changement.

2. Laser à l'état solide selon la revendication 1, dans lequel ledit élément non-linéaire (8) est un cristal de doublement de fréquence ayant une direction non-critique, et où ledit cristal est aligné avec ledit laser à l'état solide principal (1) dans un plan transverse à ladite direction, et fixé à un élément de commande chauffant (44), dans ladite direction.

3. Laser à l'état solide selon la revendication 2, dans lequel ledit élément de commande de chauffage (44) applique une différence thermique pour créer des isothermes dans ledit plan.

4. Laser à l'état solide selon la revendication 2, dans lequel ledit élément de commande thermique (44) applique une différence thermique en coordination avec un régime d'impulsions sélectionné pour conditionner thermiquement l'élément non-linéaire avant qu'il soit illuminé avec la lumière fondamentale.

5. Laser à l'état solide selon la revendication 4, dans lequel ledit élément de commande chauffant (44) applique une différence thermique en coordination avec un régime d'impulsion sélectionné pour conditionner thermiquement l'élément non-linéaire quand il est illuminé avec la lumière fondamentale.

6. Laser à l'état solide selon la revendication 4, dans lequel ledit laser à l'état solide (1) est un système de laser médical et ledit circuit de commande pulsé (20) produit des impulsions efficaces pour des applications ophtalmologiques ayant une durée d'impulsion pendant approximativement dix millisecondes.

7. Laser à l'état solide selon la revendication 6, comprenant en outre un moyen (42) pour préchauffer le réseau de diodes d'une quantité efficace pour raidir sa sortie pendant un intervalle initial de mise en service.

8. Laser à l'état solide selon la revendication 4, dans lequel ledit laser à l'état solide (1) est un système de laser médical en dermatologie et ledit circuit de commande pulsé (20) produit des impulsions efficaces pour la coagulation ayant une durée d'impulsion inférieure approximativement à dix millisecondes.

9. Laser à l'état solide selon la revendication 4, dans lequel ledit laser à l'état solide (1) est un système laser industriel et ledit système de commande pulsé (20) produit des impulsions efficaces pour un marquage précis ou pour une ablation de découpe.

10. Laser à l'état solide selon la revendication 2, dans lequel ledit élément de commande thermique (44) applique une différence thermique en coordination avec un régime d'impulsion sélectionné pour conditionner thermiquement au moins un du réseau de diodes (2) et de l'élément non-linéaire (8) avant l'application du régime d'impulsion et maintenir ensuite une gamme de température voulue pour le fonctionnement pendant un régime d'impulsions successif.

11. Système de laser à l'état solide comprenant :
un laser à l'état solide principal (1) capable d'être pompé dans un mode d'oscillation pour émettre un faisceau de lumière laser fondamentale (6).
un réseau (2) de lasers de diode de pompage semi-conductrice à émission de lumière disposées pour diriger leur lumière de pompage dans le laser à l'état solide (1), et un élément non-linéaire (8) disposé avec ledit laser à l'état solide (1) dans une cavité laser pour recevoir le faisceau laser fondamental (6), et
un dispositif de commande d'impulsion (20) pour activer par impulsion le réseau de diodes (2) et ainsi initier des conditions de changement de génération, de couplage ou de propagation de la lumière dans le système
où l'élément non-linéaire (8) produit une conversion non-linéaire plus grande de la lumière laser fondamentale lorsque la lumière laser fondamentale est instable ou fait des pointes, et où le laser à l'état solide principal (1) et l'élément non-linéaire (8) résident dans une cavité laser qui est suffisamment courte pour que ledit élément non-linéaire (8) continue à fournir une sortie convertie à un niveau stable pendant lesdites conditions de changement de génération, de couplage et de propagation quand ledit réseau (2) de lasers de diodes semi-conductrices est activé par impulsion.

12. Système de laser à l'état solide selon la revendication 11, dans lequel le dispositif de commande d'impulsion (20) fournit des séquences d'impulsions ayant une durée caractéristique inférieure allant approximativement d'une milliseconde à environ dix millisecondes et le système est un système médical dermatologique.

13. Système de laser à l'état solide selon la revendication 12, dans lequel la lumière de diode (32) est manipulée par des éléments micro-optiques (4) afin de former un point de pompage unique (3) plutôt qu'un spot étendu.

14. Système de Laser à l'état solide selon la revendication 2, dans lequel la lumière de diode est dirigée dans le volume de mode TEMoo du laser à l'état solide (1).

15. Système de laser à l'état solide selon la revendication 12, dans lequel l'élément non-linéaire (8) est chauffé.

16. Système de laser à l'état solide selon la revendication 12, dans lequel la sortie laser (9) est contrôlée par un détecteur et la sortie du détecteur pour fournir un ajustement de contre-réaction de la puissance de la diode et pour commander la sortie laser.

17. Système de laser à l'état solide selon la revendication 12, dans lequel le laser fondamental (1) fonctionne sur une pluralité de lignes laser, et
le cristal non-linéaire (8) mélange des lignes d'oscillation pour produire une sortie décalée en longueur d'onde.

18. Système laser à l'état solide selon la revendication 12, dans lequel au moins un, du taux ou de l'amplitude d'impulsion de la diode laser est modulé pour empêcher un fonctionnement stable, et ainsi augmenter la sortie convertie de longueur d'onde du cristal non-linéaire (8).
